(19) Europäisches Patentamt
European Patent Office
Office européen des brevets

(11) **EP 4 610 824 A1**

(12) **EUROPEAN PATENT APPLICATION**

(43) Date of publication:
**03.09.2025 Bulletin 2025/36**

(21) Application number: **24159934.9**

(22) Date of filing: **27.02.2024**

(51) International Patent Classification (IPC):
*G06F 9/48* (2006.01)

(52) Cooperative Patent Classification (CPC):
**G06F 9/4856; G06F 9/4875;** G06F 2209/5019;
G06F 2209/5022; G06F 2209/503; G06F 2209/508

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Aktiengesellschaft**
**80333 München (DE)**

(72) Inventor: **SHUKLA, Puneet**
**411057 Pune, Maharashtra (IN)**

(74) Representative: **HKW Intellectual Property PartG
mbB**
**Theresienhöhe 12**
**80339 München (DE)**

(54) **SYSTEM AND METHOD FOR MANAGING COMPUTING RESOURCES**

(57)     A method (300) for managing computing resources (122) for workload is disclosed. The method comprises estimating (302), by one or more processors (132) using a first mathematical model, a time period indicative of a minimum requirement of the computing resources for the workload. Further, the method comprises determining (304), by the one or more processors (132) using a second mathematical model, a probability of availability of a first type of computing resources (122a) during the estimated time period of the minimum requirement. Further, the method comprises comparing (306) the determined probability of availability of the first type of computing resources (122a) with an availability threshold. Furthermore, the method comprises migrating (308) the workload to the first type of computing resources (122a) at the estimated time period upon determining that the determined probability of availability is meeting the availability threshold.

300

302

304

306

308

**FIG. 3A**

**Description**

The present invention generally relates to cloud computing, and more particularly relates to a system and a method for managing computing resources for workload in a cloud computing-based environment.

Traditionally, companies and organizations relied on physical servers and infrastructure to host applications and store data. However, with the advent of cloud computing, the companies and organizations have been utilizing cloud-based resources as per their requirements. The cloud-based resources are provided by cloud providers, and the companies and organizations act as clients for the cloud providers.

In the dynamic realm of computing, cloud computing has revolutionized the way businesses access and utilize resources. Cloud computing involves the delivery of various resources, such as storage, computing power, and software, over the internet to clients. The clients can then utilize the cloud services for their operations and functionality. Specifically, the clients can access computing power and storage remotely, enabling them to focus on their core business activities without the burden of managing infrastructure. This enables flexibility and scalability for the clients.

As more and more organizations are depending on cloud resources, there is an increased requirement for sustainable and optimization cloud infrastructure. Designing of cloud architecture includes multiple challenges, such as balancing cost efficiency and scalability, reducing carbon footprint of computing resources, integration with legacy systems, security and compliance, availability, and recovery planning.

Some solutions provided by cloud providers include spot instances, serverless resources, reserved elastic instances, virtual nodes, etc. However, cloud architectures using available solutions across different regions and communities are designed based on resources present at the time of designing the cloud architectures. This leads to a static architecture which is based on resources present at the time of designing and does not take into account future usage, thus making management of cloud resources inefficient, particularly in terms of sustainability and cost-effectiveness. There is a requirement for solutions to efficiently serve clients in a cost-effective manner while maintaining sustainability and low carbon footprint.

Accordingly, there is a need for a system and method to overcome the above-identified issues.

According to one embodiment of the present invention, a method for managing computing resources for workload is disclosed. The method comprises estimating, by one or more processors using a first mathematical model, a time period indicative of a minimum requirement of the computing resources for the workload. Further, the method comprises determining, by the one or more processors using a second mathematical model, a probability of availability of a first type of computing resources during the estimated time period of the minimum requirement. Further, the method comprises comparing the determined probability of availability of the first type of computing resources with an availability threshold. Furthermore, the method comprises migrating the workload to the first type of computing resources at the estimated time period upon determining that the determined probability of availability is meeting the availability threshold. The disclosed method allows enables automatically migrating workloads to a different computing resource to reduce cost and facilitate sustainability. Availability of the different computing resource can be estimated during a suitable time period (which can be estimated based on usage history) and the workload can be migrated to the different computing resource during the suitable time period. The different computing resource can be a low-cost and sustainable resource, thereby facilitating a sustainable cloud infrastructure.

In an embodiment, the method includes migrating the workload to a second type of computing resources during the estimated time period upon determining that the determined probability of availability fails to meet the availability threshold. The disclosed method provides flexibility to migrate to a second type of computing resources in scenarios where a first type of computing resources may not be available.

In an embodiment, in estimating the time period indicative of the minimum requirement of the computing resources for the workload, the method includes determining, using the first mathematical model, corresponding average usage values associated with the workload during a predetermined number of historical time periods. In an embodiment, the method includes determining, using the first mathematical model, corresponding standard deviation values associated with the workload during the predetermined number of historical time periods. In an embodiment, the method includes determining a usage threshold based on the corresponding average usage values and the corresponding standard deviation values. In an embodiment, the method includes estimating, based on the usage threshold, the time period when requirement of the computing resources for the workload is minimum. The disclosed method allows predicting requirement of computing resources at a certain time so as to enable automatic migration of the workload to a cost-efficient resource during the predicted time....

In an embodiment, the first mathematical model is trained to estimate the time period based on the corresponding average usage values and the corresponding standard deviation values for the predetermined number of historical time periods. The use of the first mathematical model allows efficiently predicting the time period suitable for migration, and in addition, the model can learn from usage patterns and get more optimized.

In an embodiment, the second mathematical model is trained to determine the probability of availability of the first type of computing resources based on value parameters associated with the first type of computing resources for the predetermined number of historical time periods. The use of the second mathematical model allows efficiently predicting the availability of cost-efficient resources at a desired time period, and in addition, the model can learn from usage patterns and get more optimized.

In an embodiment, the method includes determining Carbon Dioxide Equivalent (CO2e) parameter associated with the workload during the estimated time period. The method further includes comparing the CO2e parameter with a CO2e threshold. The method further includes migrating the workload to the first type of computing resources during the estimated time period upon determining that the CO2e parameter fails to meet the CO2e threshold. The disclosed method provides an approach to effectively use low cost and sustainable cloud resources by taking into account carbon footprint associated with the workload. That is, a sustainable and low-cost infrastructure can be provided that has minimum carbon footprint.

In an embodiment, the method includes determining the CO2e parameter based on an emissions factor associated with a service provider for the computing resources, CO2e emissions for the time period, and a carbon offset percentage associated with the service provider. The disclosed method thus facilitates a sustainable cloud infrastructure having minimal carbon footprint.

In an embodiment, the first type of computing resources includes spot instances. In an embodiment, the second type of computing resources includes serverless instances. With effective utilization of spot instances and serverless instances, wastage of cloud computing resources is prevented.

According to another embodiment of the present invention, a system to manage computing resources for workload is disclosed. The system includes a memory and one or more processors communicatively coupled to the memory. The memory includes programmable instructions executable by the one or more processors. The programmable instructions, when executed by the one or more processors, cause the one or more processors to perform one or more methods, as discussed throughout the present invention.

According to another embodiment of the present invention, a cloud computing environment is disclosed. The environment includes a system, as discussed throughout the present invention, and a client device communicatively coupled to the system via a network. The system is configured to perform one or more methods, as discussed throughout the present invention.

According to another embodiment of the present invention, a computer-program product is disclosed. The computer-program product has machine-readable instructions stored therein, that when executed by one or more processors, cause the one or more processors to perform one or more methods, as discussed throughout the present invention.

According to another embodiment of the present invention, a non-transitory computer-readable medium is disclosed. The non-transitory computer-readable medium is encoded with executable instructions, that when executed by one or more processors, cause the one or more processors to perform one or more methods, as discussed throughout the present invention.

To further clarify the advantages and features of the present invention, a more particular description of the invention will be rendered by reference to specific embodiments thereof, which are illustrated in the appended drawings. It is appreciated that these drawings depict only typical embodiments of the invention and are therefore not to be considered limiting of its scope. The invention will be described and explained with additional specificity and detail with the accompanying drawings.

These and other features, aspects, and advantages of the present invention will become better understood when the following detailed description is read with reference to the accompanying drawings in which like characters represent like parts throughout the drawings, wherein:

FIG. 1A illustrates an overview of a communication environment comprising a system for managing computing resources for workload, according to an embodiment of the present invention;

FIG. 1B illustrates a detailed block diagram of the communication environment, according to an embodiment of the present invention;

FIG. 2 illustrates a sequence flow for managing the computing resources by the system, according to an embodiment of the present invention;

FIG. 3A illustrates an exemplary process flow depicting a method for managing computing resources for the workload, according to an embodiment of the present invention;

FIG. 3B illustrates an exemplary process flow depicting a method for estimating time period indicative of the minimum requirement of the computing resources for the workload, according to an embodiment of the present invention;

FIG. 4A illustrates a representation of a trained mathematical model, according to an embodiment of the present invention; and

FIG. 4B illustrates another representation of a trained mathematical model, according to an embodiment of the present invention.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

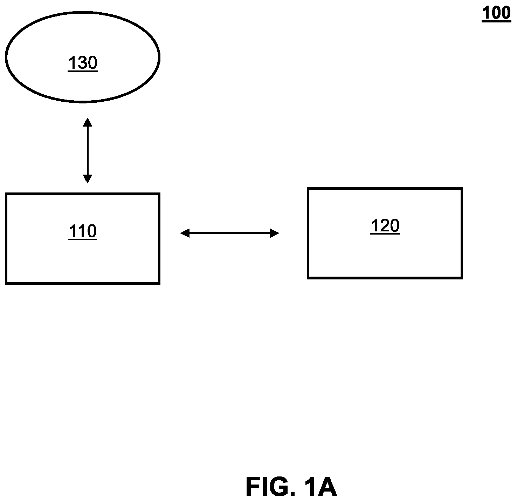

FIG. 1A illustrates an overview of a communication environment 100 comprising one or more client devices 110 and one or more service providers 120. The one or more service providers 120 are configured to provide computing resources to the one or more client devices 110. The one or more service providers 120 include, for instance, cloud providers. The computing resources provided by the one or more service providers 120 are utilized by the one or more client devices 110 to run the corresponding workload. The workload refers to, for instance, various applications and client data. The one or more client devices 110 enable the associated clients to utilize the computing resources, such as by providing dedicated applications or thorough web-based portals. The one or more client devices 110 are associated with cloud service accounts with the one or more service providers 120 in order to utilize the computing resources.

The one or more client devices 110 correspond to client devices associated with an organization, a company, or one or more individuals. In an exemplary embodiment, the one or more client devices 110 include electronic devices such as a laptop computer, a desktop computer, a smartphone, and the like. The one or more service providers 120 include a common service provider or multiple service providers. The one or more service providers 120 include a plurality of servers configured to provision the computing resources.

The communication environment 100 further comprises a system 130 for managing computing resources for the workload associated with the one or more client devices 110. The system 130 is communicatively coupled to the one or more client devices 110 and/or the one or more service providers 120.

In an embodiment, the system 130 is a cloud-based system, such as a cloud server. In such an embodiment, the functionality of the system 130 is provided by the cloud server, and the details provided with respect to the system 130 would be applicable for the cloud server. In another embodiment, the system 130 is hosted on one or more electronic devices. For instance, the system 130 is hosted on the one or more client devices 110. In an embodiment, the system 130 is provided in a distributed manner, in that, one or more components and/or functionalities of the system 130 are provided through an electronic device, and one or more components and/or functionalities of the system 130 are be provided through a cloud-based unit.

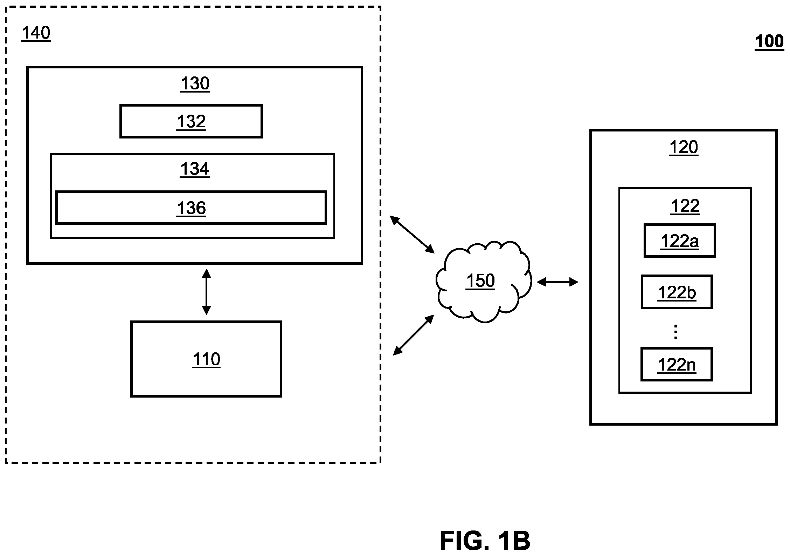

FIG. 1B illustrates a detailed block diagram of the communication environment 100. The system 130 and the one or more client devices 110 together form a cloud environment 140 in communication with the one or more service providers 120 via a network 150. The network 150 includes a wireless network or a wired network. For example, the network 150 corresponds to wireless communication network that allows communication between the system 130, the one or more client devices 110, and the one or more service providers 120 via the internet.

The system 130 for managing computing resources for the workload associated with one or more client devices 110 includes one or more processors 132 and a memory 134. As a non-limiting example, the one or more processors 132 are a single processing unit or a set of units each including multiple computing units. The one or more processors 132 are implemented as one or more microprocessors, microcomputers, microcontrollers, digital signal processors, central processing units, state machines, logic circuitries, and/or any devices that manipulate signals based on operational instructions (computer-readable instructions) stored in the memory 134. Among other capabilities, the one or more processors 132 are configured to fetch and execute computer-readable instructions and data stored in the memory 134. The one or more processors 132 include one or a plurality of processors. The plurality of processors are further implemented as a general-purpose processor, such as a central processing unit (CPU), an application processor (AP), or the like, a graphics-only processing unit, such as a graphics processing unit (GPU), a visual processing unit (VPU), and/or an AI-dedicated processor such as a neural processing unit (NPU). The plurality of processors control the processing of the input data in accordance with a predefined operating rule or an artificial intelligence (AI) model stored in the memory 134. The predefined operating rule or the AI model is provided through training or learning.

The one or more processors 132 are disposed in communication with one or more input/output (I/O) devices via an Input/Output (I/O) interface. The I/O interface employs communication code-division multiple access (CDMA), high-speed packet access (HSPA+), global system for mobile communications (GSM), long-term evolution (LTE), WiMax, or the like, etc. In another embodiment of the present invention, the I/O interface employs ethernet, industrial wireless Local Area Network (LAN), Process Field Bus (PROFIBUS), Actuator Sensor (AS) Interface, and the like.

In some embodiments, the memory 134 is communicatively coupled to the one or more processors 132. The memory 134 is configured to store instructions executable by the one or more processors 132. In one embodiment, the memory 134 communicates via a bus within the system 130. The memory 134 includes, but is not limited to, a non-transitory computer-readable storage media, such as various types of volatile and non-volatile storage media including, but not limited to, random access memory, read-only memory, programmable read-only memory, electrically programmable read-only memory, electrically erasable read-only memory, flash memory, magnetic tape or disk, optical media and the like. In one example, the memory includes a cache or random-access memory (RAM) for the one or more processors 132. In alternative examples, the memory 134 is separate from the one or more processors 132 such as a cache memory of a processor, the system memory, or other memory. The memory 134 is an external storage device or a database for storing data. The memory 134 is operable to store instructions executable by the one or more processors 132. The functions, acts or tasks illustrated in the figures or described are performed by the programmed processor for executing the instructions stored in the memory 134. The functions, acts or tasks are independent of the particular type of instructions set, storage media, processor or processing strategy and may be performed by software, hardware, integrated circuits, firmware, micro-code and the like, operating alone or in combination. Likewise, processing strategies include multiprocessing, multitasking, parallel processing, and the like.

The memory 134 includes a database 136 to store data. Further, the memory 134 includes an operating system for performing one or more tasks of the system 130, as performed by a generic operating system. In one embodiment, the database 136 is configured to store the information as required by the one or more processors 132 to perform one or more functions for managing computing resources for the workload.

In a non-limiting example, the database 136 is provided through the cloud storage and the one or more processors 132 are integrated with an electronic device (such as the one or more client devices 110).

Further, the present invention also contemplates a computer-program product that includes instructions or receives and executes instructions responsive to a propagated signal. Further, the instructions are transmitted or received over the network 150 via a communication port or interface or using a bus (not shown). The communication port or interface may be a part of the one or more processors 132 or may be a separate component. The communication port may be created in software or may be a physical connection in hardware. The communication port may be configured to connect with the network 150, external media, the display, or any other components in the system 130. The connection with the network 150 may be a physical connection, such as a wired ethernet connection, or may be established wirelessly. Likewise, the additional connections with other components of the system 130 may be physical or may be established wirelessly. The network 150 may alternatively be directly connected to the bus. For the sake of brevity, the architecture, and standard operations of the memory 134 and the one or more processors 132 are not discussed in detail.

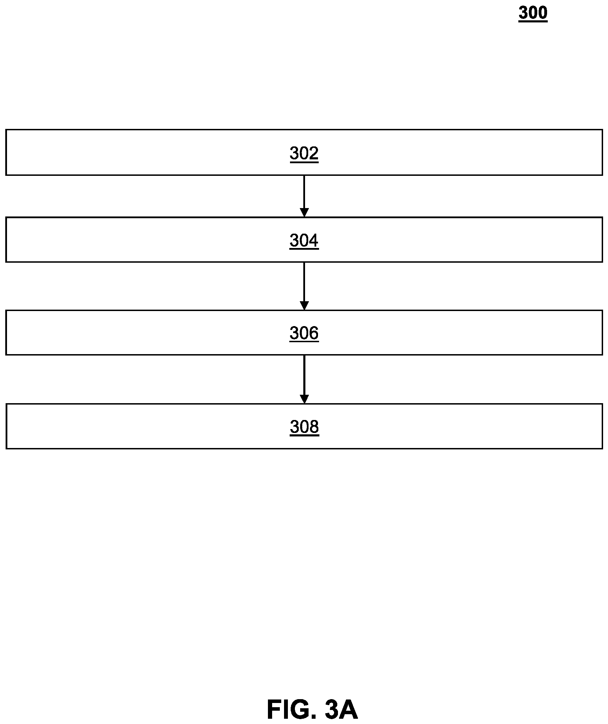

In an embodiment, the computer-program product, having machine-readable instructions stored therein, when executed by one or more processors 132, cause the one or more processors 132 to perform a method of managing computing resources for a workload. The details on the method(s) performed by the one or more processors 132 have been elaborated in subsequent paragraphs at least with reference to FIG. 3A-3B.

Further, the present invention also contemplates a non-transitory computer-readable medium encoded with executable instructions. The executable instructions, when executed by one or more processors 132, cause the one or more processors 132 to perform a method of managing computing resources for a workload. The details on the method(s) performed by the one or more processors 132 have been elaborated in subsequent paragraphs at least with reference to FIG. 3A-3B. Examples of computer-readable mediums include nonvolatile, hard-coded type mediums such as read-only memories (ROMs) or erasable, electrically programmable read-only memories (EEPROMs), and user-recordable type mediums such as floppy disks, hard disk drives and compact disk read-only memories (CD-ROMs) or digital versatile disks (DVDs).

Further, the one or more service providers 120 are configured to provide multiple types of computing resources 122, such as, a first type of computing resource 122a, a second type of computing resource 122b, ... a nth type of computing resource 122n. The multiple types of computing resources include spot instances, serverless instances, reserved instances, virtual nodes, and the like.

Spot instances refer to computing resources that are being unused and/or wasted on cloud computing platforms managed by the one or more service providers 120. Spot instances become available at discounted prices, however, the prices fluctuate based on demand for the unused cloud resources. The spot instances are suitable for workload that can be interrupted and for workload that have flexible start and end times.

Serverless instances refer to computing resource model where the one or more service providers 120 manage the infrastructure associated with the computing resources and the one or more client devices 110 focus only on utilizing the computing resources without requiring management of the underlying hardware or server provisioning (such as, scaling and maintenance).

Reserved instances refer to computing resources that are reserved for future use based on predicted usage in the future.

Virtual nodes refer to virtual machines (VMs) managed by the one or more service providers 120 and accessible via the one or more client devices 110. The virtual nodes are utilized to host applications and services, providing the associated clients with flexible computing environment without requiring to manage physical hardware.

In an embodiment, the first type of computing resource 122a include spot instances. In an embodiment, the second type of computing resource 122b include serverless instances.

In an embodiment, the one or more processors 132 are configured to estimate a time period indicative of a minimum requirement of the computing resources for the workload. That is, the estimated time period is indicative of a minimum usage of the computing resources for the workload. The estimated time period indicates a suitable time when the workload can be migrated to a different type of computing resource. The computing resources refer to one or more of the multiple computing resources 122 provided by the one or more service providers 120. In an embodiment, the estimated time period is indicative of particular time or hours in a day when there is minimum requirement of the computing resources for the workload.

In an embodiment, the one or more processors 132 are configured to estimate the time period using a first mathematical model. In an embodiment, the first mathematical model is stored in the database 136. The first mathematical model is trained to estimate the time period indicative of the minimum requirement of the computing resources for the workload. The first mathematical model is trained based on historical data for a predetermined number of historical time periods. As non-limiting examples, the predetermined number of historical time periods may include past six months, past one year, past two years, and the like. As non-limiting examples, the first mathematical model includes one or more of ARIMA (Autoregressive Integrated Moving Average), Seasonal ARIMA (SARIMA), Prophet, etc.

In an embodiment, the historical data is stored in the database 136 associated with the system 130. The historical data includes average usage values associated with the workload during the predetermined number of historical time periods. The historical data further includes standard deviation values associated with the workload during the predetermined number of historical time periods. Considering an example when the predetermined number of historical time period includes past one year, the historical data includes corresponding average usage values and corresponding standard deviation values associated with the workload for each hour of each day during the past one year.

To estimate the time period indicative of the minimum requirement of the computing resources for the workload, the one or more processors 132 are configured to determine the corresponding average usage values associated with the workload during the predetermined number of historical time periods using the first mathematical model. Further, using the first mathematical model, the one or more processors 132 are configured to determine corresponding standard deviation values associated with the workload during the predetermined number of historical time periods.

In an embodiment, the corresponding average usage values during a particular time period are indicative of an estimate of the typical usage of the computing resources during the particular time period, while the standard deviation values during the particular time period are indicative of a variability around the average usage values associated with the usage of the computing resources during the particular time period.

Considering the example where average usage values and standard deviation values are to be determined for each hour in a day for the past year, let X be a matrix of usage data in which each row represents a timestamp and each column represents a usage metric (such as, memory, network traffic, disk I/O, central processing unit (CPU)). Let $X_{ij}$ be the value of the i-th row and j-th column in the matrix X. The average usage value for each hour of the day is determined based on the equation (1) below:

$$mean_{j(k)} = \frac{1}{N} * sum_{\{i=1\}}^{N} X_{ij} \dots (1)$$

where $k$ is the hour of the day ($0 <= k <= 23$) and $N$ is the number of timestamps in the hour $k$. The standard deviation value for each hour of the day is determined based on the equation (2) below:

$$std_{j(k)} = sqrt\left(\frac{1}{N} * sum_{\{i=1\}}^{N}\left(X_{ij} - mean_{j(k)}\right)^2\right) \dots (2)$$

Further, the one or more processors 132 are configured to determine a usage threshold based on the corresponding average usage values and the corresponding standard deviation values. The usage threshold define a value below which the usage of the computing resources for the workload is considered to be minimal. In an embodiment, the usage threshold is defined as the average usage value minus two standard deviations. Based on the usage threshold, the one or more processors 132 are configured to estimate the time period when requirement of the computing resources for the workload is minimum. For instance, the one or more processors 132 are configured to estimate the time period when usage of the computing resources for the workload fails to meet the usage threshold.

Considering the above-mentioned example of the matrix X, the usage threshold is determined based on the equation (3) below:

$$threshold_{j(k)} = mean_{j(k)} - 2 * std_{j(k)} \dots (3)$$

where $k$ is the hour of the day ($0 <= k <= 23$) and $j$ is the usage metric (such as, CPU, memory, network traffic, disk I/O, etc.).

Further, the estimated time period when requirement of the computing resources for the workload is minimum is determined based on the equation (4) below:

$$minimal_{usage_{i(j)}} = \min\{k: X_{ij} < threshold_{j(k)}\} \dots (4)$$

where $i$ is the day of the year ($0 <= i <= 365$) and $j$ is the usage metric (such as, CPU, memory, network traffic, disk I/O, etc.). Accordingly, the time period when usage of the computing resources is the minimum is estimated. As mentioned above, the estimated time period indicates a suitable time when the workload can be migrated to a different type of computing resource. The different type of computing resource includes, for instance, the first type of computing resource 122a. In an embodiment, the first type of computing resource 122a includes spot instances.

The one or more processors 132 are configured to determine a probability of availability of the first type of computing resources 122a during the estimated time period of the minimum requirement. The one or more processors 132 are configured to determine the probability of availability of the first type of computing resources 122a using a second mathematical model. In an embodiment, the second mathematical model is stored in the database 136 associated with the system 130. The second mathematical model is trained to determine the probability of availability of the first type of computing resources based on value parameters associated with the first type of computing resources 122a for the predetermined number of historical time periods. In non-limiting examples, the value parameters associated with the first type of computing resources 122a include historical pricing of the first type of computing resources 122a, average number of instance interruptions associated with the first type of computing resources 122a, and number of price bids per hour for the first type of computing resources 122a. In non-limiting examples, the second mathematical model includes one or more of time-series forecasting model, Random Forests or Gradient Boosting Machines (GBM), logistics regression, and other neural networks.

In an embodiment, to train the second mathematical model, the one or more processors 132 are configured to collect the value parameters associated with the first type of computing resources 122a. The value parameters are collected for a certain time period during the predetermined number of historical time periods which corresponds the estimated time period. As a non-limiting example, the estimated time period may be 6AM-8AM and the value parameters may be collected for 6AM-8AM during each day for the past year. In an embodiment, the value parameters may be collected from the one or more service providers using Application Programming Interfaces (APIs).

In an embodiment, the collected value parameters are pre-processed to remove outliers, fill missing data, and convert to a format suitable for analysis by the second mathematical model. The second mathematical model can then be trained to forecast the value parameter for the first type of computing resources during the estimated time period. Further, the second mathematical model can then be trained to estimate the probability of availability of the first type of computing resources during the estimated time period. In an embodiment, the probability of availability of the first type of computing resources are estimated based on the equation (5) below:

$$Availability\ Probability = \exp(-\lambda P) \dots (5)$$

where $\lambda$ is the average number of instance interruptions per hour for the first type of computing resources and $P$ is the number of price bids per hour for the first type of computing resources.

Further, the one or more processors 132 are configured to compare the determined probability of availability of the first type of computing resources 122a with an availability threshold. In an embodiment, the availability threshold is a predefined value stored in the database 136. The one or more processors 132 are configured to determine whether the determined probability of availability meets the availability threshold. In an embodiment, if the determined probability of availability meets the availability threshold or is above the availability threshold, then the first type of computing resources 122a is considered available for the estimated time period of minimum requirement.

Upon a determination that the determined probability of availability meets the availability threshold, the one or more processors 132 are configured to migrate the workload to the first type of computing resources 122a at the estimated time period of minimum requirement.

Further, in case the determined probability of availability fails to meet the availability threshold, then the workload is migrated to a different type of computing resource. That is, upon a determination that the determined probability of availability fails to meet the availability threshold, the one or more processors 132 are configured to migrate the workload to the second type of computing resources 122b at the estimated time period of minimum requirement. In an embodiment, the second type of computing resources 122b are serverless instances.

In an embodiment, carbon footprint associated with the usage of the computing resources is considered to trigger migration of the workload to the first type of computing resources 122a. That is, prior to migrating the workload to the first type of computing resources 122a at the estimated time period of minimum requirement, the one or more processors 132 are configured to estimate the carbon footprint of the usage of the computing resources.

In particular, the one or more processors 132 are configured to determine Carbon Dioxide Equivalent (CO2e) parameter associated with the workload during the estimated time period. In an embodiment, the CO2e parameter associated with the workload is determined based on an emissions factor associated with the one or more service providers 120, a carbon offset percentage associated with the one or more service providers 120, and CO2e emissions associated with usage of the computing resources.

In a non-limiting example, let EF be the emissions factor, COP be the carbon offset percentage, and EC be the energy consumption associated with the one or more service providers 120 for the established time period, and CE be the CO2e emissions for the estimated time period. The CO2e emissions are calculated based on the equation (6) below:

$$CE = EC * EF \dots (6)$$

Further, the CO2e parameter (ACE) for the estimated time period (also referred to as adjusted CO2e emissions) is calculated based on the equation (7) below:

$$ACE = CE * (1 - COP) \dots (7)$$

Further, the one or more processors 132 are configured to compare the determined CO2e parameter with a CO2e threshold. In an embodiment, the CO2e threshold is a predefined value stored in the database 136. The one or more processors 132 are configured to determine whether the determined CO2e parameter meets the CO2e threshold. Upon a determination that the CO2e parameter fails to meet the CO2e threshold, the one or more processors 132 are configured to migrate the workload to the first type of computing resources 122a during the estimated time period.

Accordingly, the workload can be migrated to the first type of computing resources 122a or the second type of computing resources 122b depending on the availability of the first type of computing resources 122a as well as depending on the carbon footprint associated with usage of the computing resources.

As a non-limiting example, the workload may initially be utilizing virtual nodes as a computing resource. The system 130 may determine that 6AM-8AM is a suitable time to migrate the workload to a different type of computing resource, such as spot instances. The system 130 determines the availability of the spot instances during the desired time (6AM-8AM) and if available, the workload can be migrated to the spot instances. Additionally, the system 130 may consider the CO2e parameter associated with the workload prior to migrating the workload to the spot instances.

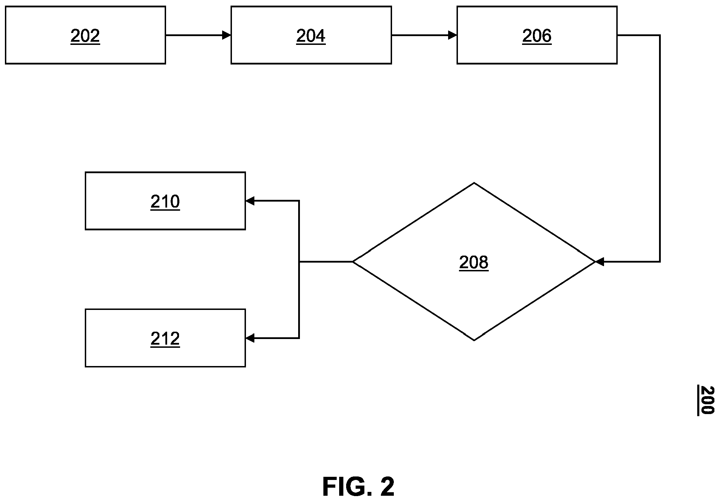

Referring to FIG. 2, a sequence flow 200 for managing the computing resources by the system 130 is depicted. The sequence flow starts at block 202 where the system 130 accesses historical data to determine corresponding average usage values and standard deviation values for the predetermined number of historical time periods (such as, one year).

As described above, the historical data is stored in the database 136.

At block 204, the system 130 analyzes the historical data to estimate the time period indicative of the minimum requirement of the computing resources for the workload. As described above, the system 130 analyzes the historical data using the first mathematical model.

At block 206, the system 130 determines the $CO_2e$ parameter associated with usage of the computing resources for the workload. Further, the system 130 determines whether the $CO_2e$ parameter fails to meet the $CO_2e$ threshold. As described above, the $CO_2e$ threshold is a predefined value stored in the database 136. Upon determining that the $CO_2e$ parameter meets the $CO_2e$ threshold, the system 130 enables the workload to continue using the computing resources being currently used and avoid migrating the workload to other computing resources, such as, the first type of computing resources or the second type of computing resources.

At block 208, upon determining that the $CO_2e$ parameter fails to meet the $CO_2e$ threshold, the system 130 determines the availability of the first type of computing resources during the estimated time period. As described above, the system 130 determines availability of the first type of computing resources using the second mathematical model.

The sequence flow 200 moves to block 210 upon the determination that the first type of computing resources are available during the estimated time period. At block 210, the workload is migrated to the first type of computing resources during the estimated time period. As described above, in a non-limiting embodiment, the first type of computing resources are spot instances.

The sequence flow 200 moves to block 212 upon the determination that the first type of computing resources are not available during the estimated time period. At block 212, the workload is migrated to the second type of computing resources during the estimated time period. As described above, in a non-limiting embodiment, the second type of computing resources are serverless instances.

FIG. 3A illustrates an exemplary process flow depicting a method 300 for managing computing resources for the workload. The method 300 is performed by the system 130, as shown in FIGS. 1A-1B. In an embodiment, the method 300 is performed by one or more processors 132 of the system 130.

At step 302, a time period indicative of the minimum requirement of the computing resources for the workload is estimated using the first mathematical model.

In an embodiment, the first mathematical model is trained to estimate the time period based on the corresponding average usage values and the corresponding standard deviation values for the predetermined number of historical time periods.

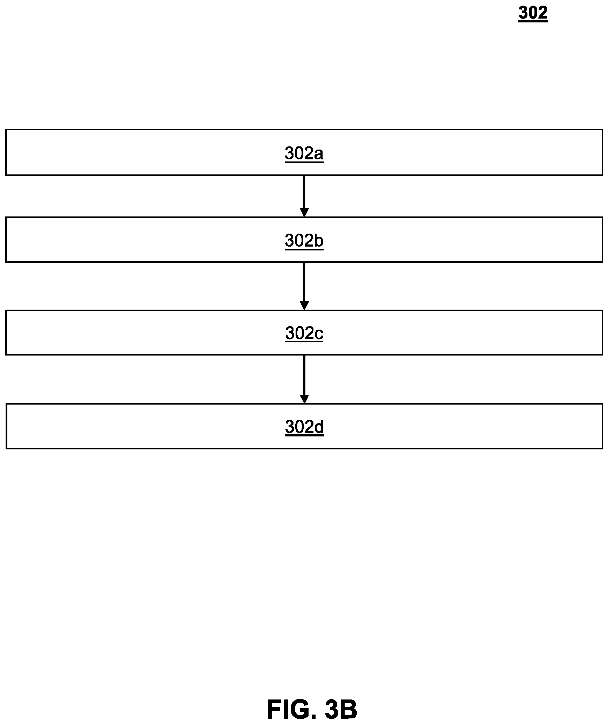

In an embodiment, to estimate the time period, the method 300 includes sub-steps 302a-302d as shown in FIG. 3B. At sub-step 302a, corresponding average usage values associated with the workload during a predetermined number of historical time periods are determined. At sub-step 302b, corresponding standard deviation values associated with the workload during the predetermined number of historical time periods are determined. At sub-step 302c, a usage threshold is determined based on the corresponding average usage values and the corresponding standard deviation values. At sub-step 302d, the time period when requirement of the computing resources for the workload is minimum is estimated based on the usage threshold.

At step 304, the probability of availability of the first type of computing resources during the estimated time period of the minimum requirement is determined using the second mathematical model.

In an embodiment, the first type of computing resources includes spot instances.

In an embodiment, the second mathematical model is trained to determine the probability of availability of the first type of computing resources based on value parameters associated with the first type of computing resources for the predetermined number of historical time periods.

At step 306, the determined probability of availability of the first type of computing resources is compared with an availability threshold.

At step 308, the workload is migrated to the first type of computing resources at the estimated time period upon determining that the determined probability of availability is meeting the availability threshold.

In an embodiment, the workload is migrated to the second type of computing resources during the estimated time period upon determining that the determined probability of availability fails to meet the availability threshold. In an embodiment, the second type of computing resources includes serverless instances.

In an embodiment, the method 300 includes determining the $CO_2e$ parameter associated with the workload during the estimated time period. The $CO_2e$ parameter is determined based on an emissions factor associated with the one or more service providers 120 for the computing resources, $CO_2e$ emissions for the time period, and a carbon offset percentage associated with the one or more service providers 120. The method 300 further includes comparing the $CO_2e$ parameter with a $CO_2e$ threshold and migrating the workload to the first type of computing resources during the estimated time period upon determining that the $CO_2e$ parameter fails to meet the $CO_2e$ threshold.

While the above steps shown in FIG. 3 are described in a particular sequence, the steps may occur in variations to the sequence in accordance with various embodiments of the present invention. Further, the details related to various steps of FIG. 3, which are already covered in the description related to FIGS. 1A-2 are not discussed again in detail here for the sake of brevity.

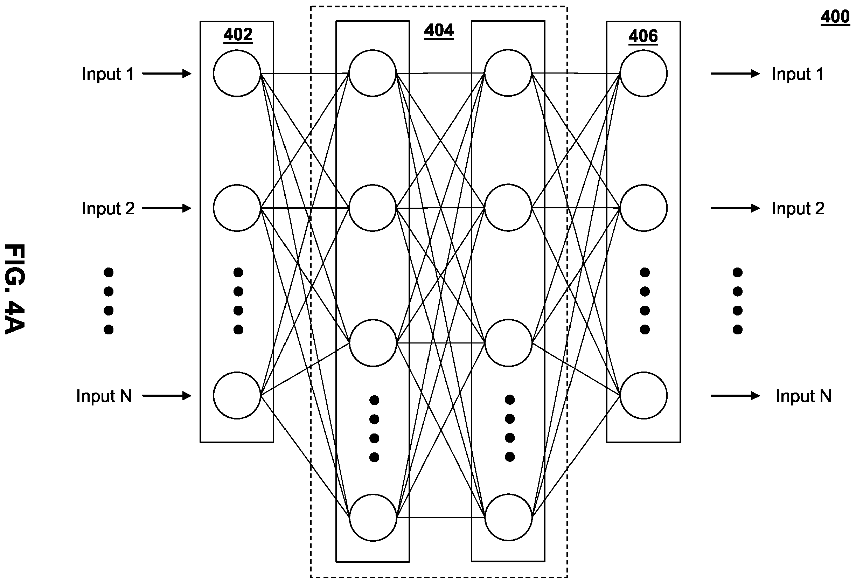

Referring to FIG. 4A, an exemplary representation of a trained mathematical model 400 is illustrated. The trained mathematical model 400 corresponds to the first mathematical model and/or the second mathematical model. The trained mathematical model 400 may be Convolutional Neural Networks (CNNs), Artificial Neural Networks (ANNs), and the like.

As shown in FIG. 4A, the trained mathematical model 400 includes an input layer 402, one or more hidden layers 404, and an output layer 406. Inputs (input 1, input 2, ...input N) are provided to the trained mathematical model 400 and outputs (output 1, output 2, ... output N) are predicted by the trained mathematical model 400.

The input layer 402 may be configured to receive input data. Each neuron within the input layer may represent a distinct feature or attribute of the data. The input data may include data such as images, text, numerical values, and the like.

The one or more hidden layers 404 may be positioned between the input layer 402 and the output layer 404. The one or more hidden layers perform calculations on input data through weighted connections and applying activation functions to produce outputs. Weights refer to parameters which determine the strength of connections between the neurons. Each connection from one neuron to another neuron is associated with a weight which may be a numerical value representing the importance of that connection in the overall network. During the training of the trained mathematical model 400, the weights associated with the connections between different neurons may be adjusted to optimize performance of the trained mathematical model 400.

Prior to training, the weights may be initialized randomly. For instance, random values may be inferred from a Gaussian distribution or a uniform distribution. During training, the weights may be updated based on prediction errors of the ANN. The weights may be updated to reduce the prediction error. For instance, a gradient of the prediction error may be calculated with respect to the weights. The weights may then be updated so as to reduce the prediction error. One example of weight updates may be via gradient descent.

The output layer 406 may be configured to generate the prediction from the input as output. The output may be in the form of classification, regression prediction, or any other output. In the trained mathematical model 400, inference can be performed using a multiply-accumulate (MAC) operation. In a MAC operation, incoming data values can be multiplied by a plurality of synaptic weights stored in a memory. After performing the MAC operation, a non-linear function can be applied to the integrated value of a neuron resulting in an output value. The output value can be a floating-point value.

Data may progress through the trained mathematical model 400 in a systematic manner, flowing from the input layer 402 to the hidden layers 404 and then to the output layer 406. The weighted sum of inputs undergoes transformation through an activation function at each neuron to add non-linearity, which enables the trained mathematical model 400 to model data patterns and relationships. Activation functions determine output of a neuron based on the weighted sum of inputs. The training process of the trained mathematical model 400 may be carried out using supervised learning or using unsupervised learning.

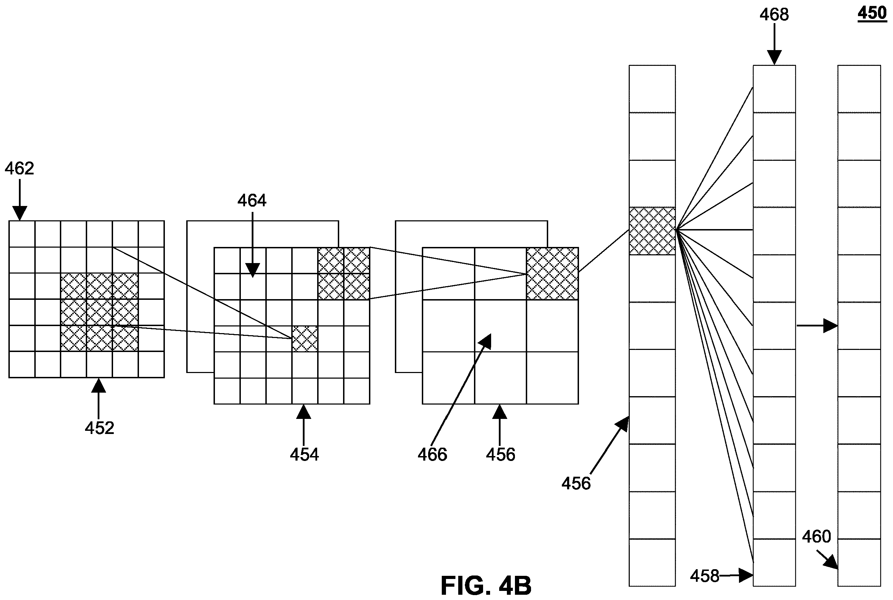

Referring to FIG. 4B, another exemplary representation of a trained mathematical model 450 is illustrated. The trained mathematical model 450 corresponds to the first mathematical model and/or the second mathematical model.

As seen in FIG. 4B, the trained mathematical model 450 comprises an input layer 452, a convolutional layer 454, a pooling layer 456, a fully connected layer 458, and an output layer 460. It is appreciated that multiple layers may be included with each of the layers of the trained mathematical model 450. In some embodiments, the order of the layers may be chosen arbitrarily. In the trained mathematical model 450, the nodes 462, ..., 468 of layers 452, ..., 460 may be considered to be arranged as a d-dimensional matrix or as a d-dimensional image. In particular, in the two-dimensional case, the value of the node 462, ..., 468 indexed with i and j in the n-th layer 452, ..., 460 may be denoted as x(n) [i,j]. However, the arrangement of the nodes 462, ..., 468 of one layer 452, ..., 460 does not have an effect on the calculations executed within the trained mathematical model 450 since these are given solely by the structure and the weights of the edges.

The convolutional layer 454 is characterized by the structure and the weights of the incoming edges forming a convolution operation based on a certain number of kernels. In particular, the structure and the weights of the incoming edges are chosen such that the values $x^{(n)}k$ of the nodes 464 of the convolutional layer 454 are calculated as a convolution $x^{(n)}k = K_k * x^{(n-1)}$ based on the values $x^{(n-1)}$ of the nodes 462 of the preceding layer 452, where the convolution* is defined in the two-dimensional case as equation (8):

$$x_k^{(n)}[i,j] = (K_k * x^{(n-1)}[i,j] = \sum_i, \sum_j, K_k[i',j'] . x^{(n-1)}[i-i',[j-j'] \ldots (8)$$

Here the k-th kernel $K_k$ is a d-dimensional matrix (in the present embodiment, a two-dimensional matrix), which is usually small compared to the number of nodes 462, ..., 468 (e.g., a 3x3 matrix, or a 5x5 matrix). In particular, this implies that the weights of the incoming edges are not independent but chosen such that they produce said convolution equation. In particular, for a kernel being a 3x3 matrix, there are only 9 independent weights (each entry of the kernel matrix corresponding to one independent weight), irrespectively of the number of nodes 462, ..., 468 in the respective layer 452, ..., 460. In particular, for a convolutional layer 454, the number of nodes 464 in the convolutional layer is equivalent to the number of nodes 462 in the preceding layer 452 multi- plied with the number of kernels.

If the nodes 462 of the preceding layer 452 are arranged as a d-dimensional matrix using a plurality of kernels may be interpreted as adding a further dimension (denoted as "depth" dimension), so that the nodes 464 of the convolutional layer 454 are arranged as a (d+1)-dimensional matrix. If the nodes 462 of the preceding layer 452 are already arranged as a (d+1)-dimensional matrix comprising a depth dimension using a plurality of kernels may be interpreted as expanding along the depth dimension so that the nodes 464 of the convolutional layer 454 are arranged also as a (d+1)-dimensional matrix. The size of the (d+1)-dimensional matrix with respect to the depth dimension is by a factor of the number of kernels larger than in the preceding layer 452.

In the displayed embodiment, the input layer 452 comprises 36 nodes 462 arranged as a two-dimensional 6x6 matrix. The convolutional layer 454 comprises 72 nodes 464, arranged as two two-dimensional 6x6 matrices, each of the two matrices being the result of a convolution of the values of the input layer with a kernel. Equivalently, the nodes 464 of the convolutional layer 454 may be interpreted as arranges as a three-dimensional 6x6x2 matrix, wherein the last dimension is the depth dimension.

The pooling layer 456 may be characterized by the structure and the weights of the incoming edges and the activation function of its nodes 466 forming a pooling operation based on a non-linear pooling function f. For example, in the two-dimensional case the values $x(n)$ of the nodes 466 of the pooling layer 456 may be calculated based on the values $x^{(n-1)}$ of the nodes 464 of the preceding layer 454 as $x^{(n)}[i, j] = f(x^{(n-1)}[id_1, jd_2], ..., x^{(n-1)}[id_1+d_1\_1, jd_2+d_2\text{-}1])$. In other words, the number of nodes 464, 466 may be reduced by using the pooling layer 456, by replacing a number di • d2 of neighbouring nodes 464 in the preceding layer 454 with a single node 466 being calculated as a function of the values of said number of neighbouring nodes in the pooling layer. In particular, the pooling function f may be the max-function, the average or the L2-Norm. In particular, for the pooling layer 456, the weights of the incoming edges are fixed and are not modified by training.

The fully-connected layer 458 may be characterized by the fact that a majority, in particular, all edges between nodes 466 of the previous layer 456 and the nodes 468 of the fully-connected layer 458 are present. The weight of each of the edges may be adjusted individually. In the present embodiment, the nodes 466 of the preceding layer 456 of the fully-connected layer 458 are displayed both as two-dimensional matrices, and additionally as non-related nodes (indicated as a line of nodes, wherein the number of nodes was reduced for a better presentability).

In some embodiments, the number of nodes in the layers may vary. In some embodiments, the trained mathematical model 450 may include a Rectified Linear Unit (ReLU) layer. In some embodiments, the trained mathematical model 450 may be trained based on the back-propagation algorithm. In some embodiments, methods of regularization may be used.

The present invention provides for various technical advancements based on the key features discussed above. The disclosed method enables automating provisioning and effectively migrating workloads to a computing resource to reduce cost and facilitate sustainability. Requirement of computing resources at a certain time can be predicted and available cost-efficient resource to fulfil the requirement can be detected. For example, availability of spot instances can be determined during a suitable time period and the workload can be automatically migrated to spot instances during the suitable time period. The suitable time period can be estimated based on historical data and automatic migration can be facilitated during the estimated time periods. Further, with effective utilization of spot instances, wastage of cloud computing resources is prevented. Moreover, as mathematical models are utilized by the disclosed method, the models can learn from usage patterns and get more optimized.

Thus, with the disclosed method, an approach to effectively use low cost and sustainable cloud resources is provided. Additionally, other parameters such as carbon footprints, can be taken into account to migrate the workload. This facilitates a sustainable and low-cost infrastructure that has minimum carbon footprint.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

LIST OF REFERENCE NUMERALS

| | |
|---|---|
| 100 | Communication Environment |
| 110 | Client device |
| 120 | Service provider |
| 122 (122A, 122B, ...122N) | Computing resources |
| 130 | System |

| 132 | One or more processors |
| 134 | Memory |
| 136 | Database |
| 140 | Cloud environment |
| 150 | Network |
| 200 | Sequence flow |
| 202, 204, 206, 208, 210, 212 | Sequence flow steps |
| 300 | Method |
| 302, 304, 306, 308 | Method steps |
| 302A, 302B, 302C, 302D | Method sub-steps |
| 400 | Trained mathematical model |
| 402 | Input layer of model |
| 404 | One or more hidden layers of model |
| 406 | Output layer of model |
| 450 | Trained mathematical model |
| 452 | Input layer of model |
| 454 | Convolutional layer of model |
| 456 | Pooling layer of model |
| 458 | Fully connected layer of model |
| 460 | Output layer of model |
| 462, 464, 466, 468 | Nodes |

**Claims**

1. A method (300) to manage computing resources (122) for workload, the method (300) comprising:

   estimating (302), by one or more processors (132) using a first mathematical model, a time period indicative of a minimum requirement of the computing resources for the workload;
   determining (304), by the one or more processors (132) using a second mathematical model, a probability of availability of a first type of computing resources (122a) during the estimated time period of the minimum requirement;
   comparing (306) the determined probability of availability of the first type of computing resources (122a) with an availability threshold;
   migrating (308) the workload to the first type of computing resources (122a) at the estimated time period upon determining that the determined probability of availability is meeting the availability threshold.

2. The method (300) according to claim 1, further comprising:
   upon determining that the determined probability of availability fails to meet the availability threshold, migrating the workload to a second type of computing resources (122b) during the estimated time period.

3. The method (300) according to any of claims 1-2, wherein estimating the time period indicative of the minimum requirement of the computing resources for the workload comprises:

   determining (302a), using the first mathematical model, corresponding average usage values associated with the workload during a predetermined number of historical time periods;
   determining (302b), using the first mathematical model, corresponding standard deviation values associated with the workload during the predetermined number of historical time periods;
   determining (302c) a usage threshold based on the corresponding average usage values and the corresponding standard deviation values; and
   estimating (302d), based on the usage threshold, the time period when requirement of the computing resources for the workload is minimum.

4. The method (300) according to any of claims 1-3, wherein the first mathematical model is trained to estimate the time period based on the corresponding average usage values and the corresponding standard deviation values for the predetermined number of historical time periods.

5. The method (300) according to any of claims 1-4, wherein the second mathematical model is trained to determine the probability of availability of the first type of computing resources (122a) based on value parameters associated with the first type of computing resources (122a) for the predetermined number of historical time periods.

6. The method (300) according to any of claims 1-5, further comprising:

determining Carbon Dioxide Equivalent (CO2e) parameter associated with the workload during the estimated time period;
comparing the CO2e parameter with a CO2e threshold; and
migrating the workload to the first type of computing resources (122a) during the estimated time period upon determining that the CO2e parameter fails to meet the CO2e threshold.

7. The method (300) according to claim 6, further comprising:
determining the CO2e parameter based on an emissions factor associated with a service provider (120) for the computing resources, CO2e emissions for the time period, and a carbon offset percentage associated with the service provider (120).

8. The method (300) according to any of claims 1-7, wherein the first type of computing resources (122a) includes spot instances.

9. The method (300) according to any of claims 1-8, wherein the second type of computing resources (122b) includes serverless instances.

10. A system (130) to manage computing resources (122) for workload, the system (130) comprising:

a memory (134); and
the one or more processors (132) communicatively coupled to the memory (134), wherein the memory (134) comprises programmable instructions which, when executed by the one or more processors (132), cause the one or more processors (132) to perform any of the method steps of claims 1 to 9.

11. A cloud computing environment (140) comprising:

a system (130) as claimed in claim 10; and
a client device (110) communicatively coupled to the system (130) via a network (150), wherein the system (130) is configured to perform a method according to any of the claims 1 to 9.

12. A computer-program product, having machine-readable instructions stored therein, which when executed by the one or more processors (132), cause the one or more processors (132) to perform a method according to any of the claims 1 to 9.

13. A non-transitory computer readable medium encoded with executable instructions which, when executed by the one or more processors (132), cause the one or more processors (132) to perform a method according to any one of the claims 1 to 9.

100

110

120

130

FIG. 1A

FIG. 1B

**FIG. 2**

300

```
┌─────────────────────────────────────────────────┐
│                      302                          │
└─────────────────────────────────────────────────┘
                          │
                          ▼
┌─────────────────────────────────────────────────┐
│                      304                          │
└─────────────────────────────────────────────────┘
                          │
                          ▼
┌─────────────────────────────────────────────────┐
│                      306                          │
└─────────────────────────────────────────────────┘
                          │
                          ▼
┌─────────────────────────────────────────────────┐
│                      308                          │
└─────────────────────────────────────────────────┘
```

# FIG. 3A

302

302a

302b

302c

302d

# FIG. 3B

FIG. 4A

**450**

468

460

458

456

FIG. 4B

456

466

454

464

452

462

EP 4 610 824 A1

**EUROPEAN SEARCH REPORT**

Application Number

EP 24 15 9934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/290511 A1 (TU SUSAN CHUZHI [US] ET AL) 31 October 2013 (2013-10-31) * paragraph [0027] * * paragraph [0014] * | 1-13 | INV. G06F9/48 |
| X | USMAN MOHAMMED JODA ET AL: "Energy-efficient Nature-Inspired techniques in Cloud computing datacenters", TELECOMMUNICATION SYSTEMS, BALTZER SCIENCE PUBLISHERS, BASEL, CH, vol. 71, no. 2, 22 February 2019 (2019-02-22), pages 275-302, XP036769058, ISSN: 1018-4864, DOI: 10.1007/S11235-019-00549-9 [retrieved on 2019-02-22] * page 279 * * page 284, left-hand column - page 285 * | 1-13 | |
| X | ANTON BELOGLAZOV ET AL: "Energy Efficient Resource Management in Virtualized Cloud Data Centers", CLUSTER, CLOUD AND GRID COMPUTING (CCGRID), 2010 10TH IEEE/ACM INTERNATIONAL CONFERENCE ON, IEEE, PISCATAWAY, NJ, USA, 17 May 2010 (2010-05-17), pages 826-831, XP031695712, ISBN: 978-1-4244-6987-1 * A. Research scope; page 827 * * IV. Allocation policies; page 829, left-hand column - right-hand column * | 1-13 | TECHNICAL FIELDS SEARCHED (IPC) G06F |

The present search report has been drawn up for all claims

| Place of search | Date of completion of the search | Examiner |
|---|---|---|
| The Hague | 4 July 2024 | Alecu, Mihail |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

## ANNEX TO THE EUROPEAN SEARCH REPORT
## ON EUROPEAN PATENT APPLICATION NO.

EP 24 15 9934

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2024

| Patent document cited in search report | Publication date | Patent family member(s) | Publication date |
|---|---|---|---|
| US 2013290511 A1 | 31-10-2013 | NONE | |

EPO FORM P0459

For more details about this annex : see Official Journal of the European Patent Office, No. 12/82